(19) Europäisches Patentamt
European Patent Office
Office européen des brevets

(11) EP 4 019 685 A1

(12) EUROPEAN PATENT APPLICATION
published in accordance with Art. 153(4) EPC

(43) Date of publication:
**29.06.2022 Bulletin 2022/26**

(21) Application number: **20857692.6**

(22) Date of filing: **20.08.2020**

(51) International Patent Classification (IPC):
***D04H 1/587*** (2012.01) ***C03C 25/1095*** (2018.01)
***C03C 25/32*** (2018.01) ***C03C 25/42*** (2006.01)
***C04B 38/00*** (2006.01) ***C08K 3/18*** (2006.01)
***C08K 3/22*** (2006.01) ***C08K 5/098*** (2006.01)
***C08K 7/04*** (2006.01) ***C08L 23/22*** (2006.01)
***C08L 29/02*** (2006.01) ***C08L 29/04*** (2006.01)
***C08L 35/02*** (2006.01) ***D04H 1/4209*** (2012.01)
***D04H 1/4218*** (2012.01) ***D06M 11/00*** (2006.01)
***D06M 15/263*** (2006.01) ***D06M 15/333*** (2006.01)

(52) Cooperative Patent Classification (CPC):
**C03C 25/1095; C03C 25/32; C03C 25/42; C04B 38/00; C08K 3/18; C08K 3/22; C08K 5/098; C08K 7/04; C08L 23/22; C08L 29/02; C08L 29/04; C08L 35/02; D04H 1/4209; D04H 1/4218; D04H 1/587;** (Cont.)

(86) International application number:
**PCT/JP2020/031368**

(87) International publication number:
**WO 2021/039556 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2019 JP 2019152474**
**21.01.2020 JP 2020007283**

(71) Applicant: **Nissin Chemical Industry Co., Ltd.**
**Fukui 915-0802 (JP)**

(72) Inventors:
- **UCHIDA, Koki**
  **Echizen-shi, Fukui 915-0802 (JP)**
- **MAKI, Yoshinori**
  **Echizen-shi, Fukui 915-0802 (JP)**
- **MITTA, Yasuhiro**
  **Echizen-shi, Fukui 915-0802 (JP)**

(74) Representative: **Ter Meer Steinmeister & Partner Patentanwälte mbB**
**Nymphenburger Straße 4**
**80335 München (DE)**

# (54) BINDER FOR INORGANIC FIBERS AND INORGANIC FIBER MAT

(57) The present invention provides a binder for inorganic fibers characterized by containing (A) 100 parts by mass of a polyvinyl alcohol-based resin having a degree of polymerization of 100-3500, (B) 1-50 parts by mass of a metal salt, and (C) 3 parts by mass of an ammonia denatured product of a copolymerization product containing maleic anhydride. By using the binder for inorganic fibers according to the present invention, it is possible to produce an inorganic fiber mat having a high recovery rate comparable to that of phenol resins. In addition, the amount of volatile organic compounds released from such an inorganic fiber mat is extremely low.

EP 4 019 685 A1

(52) Cooperative Patent Classification (CPC): (Cont.)
**D06M 11/00; D06M 15/263; D06M 15/333**

## Description

### TECHNICAL FIELD

The present invention relates to a binder for inorganic fibers, particularly a binder for inorganic fibers which, in inorganic fiber mats suitable for use as, for example, thermal insulation or acoustic insulation in construction, has an extremely low emissions of volatile organic compounds, possesses sufficient thickness and imparts an excellent recovery. The invention also relates to an inorganic fiber mat treated with such a binder.

### BACKGROUND ART

Inorganic fiber mats made of inorganic fibers such as glass wool or rock wool are widely used as thermal insulation and acoustic insulation in industrial and housing applications. Inorganic fiber mats are generally produced by using a binder composed primarily of a water-soluble phenolic resin to fix together inorganic fibers and form them into a mat (see, for example, JP-A S58-070760; Patent Document 1).

However, because formaldehyde is generally used as the crosslinking agent for the water-soluble phenolic resin serving as the main ingredient in such binders, when the binder is heat-cured, unreacted formaldehyde ends up remaining in the inorganic fiber mat. Another problem is that, even after curing has taken place, formaldehyde is generated as binder hydrolysis and condensation reactions continue to proceed. In such cases, the formaldehyde is released from the surface and sides of the inorganic fiber mat following production.

The contamination of indoor air by volatile organic compounds (VOCs) such as formaldehyde which readily volatize in air at normal temperature and pressure has become apparent in recent years. At the same time, health hazards such as sick building syndrome, one cause of which is VOCs, have become a serious concern. For this reason, formaldehyde emissions by construction materials are restricted by law, the thought being that an effective way to minimize emissions of formaldehyde and other VOCs from building materials is to make the content of such compounds exceedingly low.

Because the VOCs released from inorganic fiber mats consist largely of the formaldehyde included in the binder, in order to resolve the above problems, the composition used as the binder needs to be a formaldehyde-free composition. However, inorganic fiber mats in which conventional binders composed primarily of a phenolic resin are used have low raw material costs, in addition to which the recovery ratio of such mats is outstanding. It is thus necessary, when using a binder made up primarily of a formaldehyde-free composition, for such a binder to have the same performance as conventional binders. Yet, endowing such binders with a comparable performance has been difficult.

To address these problems, JP-A 2005-299013 (Patent Document 2) discloses a binder composed primarily of an acrylic resin-based emulsion, and JP-A 2006-089906 (Patent Document 3) discloses a binder made of a vinyl copolymer having functional groups such as carboxyl groups. However, the recovery ratio of inorganic fiber mats obtained using these binders is inferior to that of inorganic fiber mats obtained using water-soluble phenolic resin-containing binders. In addition, the present applicant has disclosed, in JP-A 2011-153395 (Patent Document 4), a binder which includes a hydroxyl group-containing water-soluble polymer compound and a boron compound. Inorganic fiber mats obtained using this binder successfully resolve the problem of VOCs, but have a recovery ratio that is somewhat inferior to inorganic fiber mats made using water-soluble phenolic resins.

WO 2005/092814 (Patent Document 5) discloses an unsaturated copolymer of maleic anhydride and an unsaturated monomer (specifically, an unsaturated copolymer of maleic anhydride and butadiene), JP-A 2012-136385 (Patent Document 6) discloses a copolymer compound of maleic anhydride and an acrylic ester, JP-A 2016-108707 (Patent Document 7) and JP-A 2016-108708 (Patent Document 8) disclose maleic acid copolymers (which appear to be methyl vinyl ether/maleic anhydride copolymer monoalkyl esters), and JP-A S60-046951 (Patent Document 9) discloses an isobutylene-maleic anhydride copolymer. Inorganic fiber mats made of inorganic fibers are produced by spraying a low-concentration water-soluble binder onto melt-spun glass, but the foregoing compounds all have poor solubilities in water and so it has not always been possible to obtain a suitable water-soluble binder.

### PRIOR ART DOCUMENTS

### PATENT DOCUMENTS

Patent Document 1: JP-A S58-070760
Patent Document 2: JP-A 2005-299013
Patent Document 3: JP-A 2006-089906

Patent Document 4: JP-A 2011-153395
Patent Document 5: WO 2005/092814
Patent Document 6: JP-A 2012-136385
Patent Document 7: JP-A 2016-108707
Patent Document 8: JP-A 2016-108708
Patent Document 9: JP-A S60-046951

## SUMMARY OF INVENTION

## TECHNICAL PROBLEM

In view of the above circumstances, an object of the present invention is to provide a binder for inorganic fibers that is capable producing an inorganic fiber mat having an excellent recovery. A further object is to provide an inorganic fiber mat treated with such a binder.

## SOLUTION TO PROBLEM

The inventors have conducted extensive investigations aimed at achieving these objects. As a result, they have discovered that a binder containing a polyvinyl alcohol resin, a metal salt and a maleic anhydride-containing copolymer modified with ammonia imparts to an inorganic fiber mat a recovery ratio comparable to that imparted by phenolic resins, and is able to achieve an exceedingly low level of VOC emissions. This discovery ultimately led to the present invention.

Accordingly, this invention provides the following binder for inorganic fibers and the following inorganic fiber mat treated with such a binder.

1. A binder for inorganic fibers, which binder includes:

    (A) 100 parts by weight of a polyvinyl alcohol resin having a degree of polymerization of from 100 to 3,500,
    (B) from 1 to 50 parts by weight of a metal salt, and
    (C) at least 3 parts by weight of a maleic anhydride-containing copolymer modified with ammonia.

2. The inorganic fiber binder of 1 above, wherein the polyvinyl alcohol resin (A) has a degree of saponification of at least 70 mol%.
3. The inorganic fiber binder of 1 or 2 above, wherein the metal salt (B) includes at least one selected from the group consisting of oxides, hydroxides, carbonates, sulfates, silicates, titanates, acetates and benzoates.
4. The inorganic fiber binder of any of 1 to 3 above, wherein the ammonia-modified maleic anhydride-containing copolymer (C) has a weight-average molecular weight of from 50,000 to 300,000 and has the following structural formula

[Chem. 1]

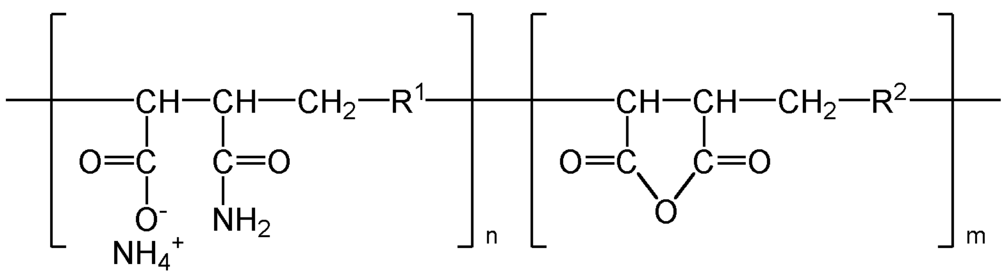

(wherein $R^1$ and $R^2$ are each independently a linear or branched alkylene group of 2 to 5 carbon atoms and n and m are positive numbers, the content of n per 100 wt% of n and m combined (n+m) being from 50 to 90 wt%).
5. The inorganic fiber binder of any of 1 to 4 above, wherein the metal salt (B) is a metal salt having a monovalent or divalent metal.
6. The inorganic fiber binder of any of claims 1 to 5, wherein the ammonia-modified maleic anhydride-containing copolymer is an ammonia-modified isobutylene-maleic anhydride copolymer.
7. The inorganic fiber binder of any of 1 to 6 above , wherein the inorganic fibers are glass wool or rock wool.

8. An inorganic fiber mat which includes inorganic fibers treated with the inorganic fiber binder of any of 1 to 7 above.

## ADVANTAGEOUS EFFECTS OF INVENTION

Inorganic fiber mats having a high recovery ratio can be produced by using the inorganic fiber binder of the invention

## BRIEF DESCRIPTION OF DRAWINGS

[FIG. 1] FIG. 1 is a schematic diagram showing a process for manufacturing an inorganic fiber mat using the inorganic fiber binder of the invention.
[FIG. 2] FIG. 2 is a perspective view showing a process for applying the inorganic fiber binder of the invention onto inorganic fibers.

## DESCRIPTION OF EMBODIMENTS

The invention is described in detail below.
The binder for inorganic fibers of the invention is an inorganic fiber binder characterized by including components (A) to (C) below:

(A) 100 parts by weight of a polyvinyl alcohol resin having a degree of polymerization of from 100 to 3,500,
(B) from 1 to 50 parts by weight of a metal salt, and
(C) at least 3 parts by weight of a maleic anhydride-containing copolymer modified with ammonia.

The polyvinyl alcohol resin used as component (A) serves the base resin of the inventive inorganic fiber binder. The polyvinyl alcohol resin (A) has a degree of polymerization of from 100 to 3,500, preferably from 100 to 2,000, and more preferably from 200 to 1,800. At more than 3,500, unfavorable effects may arise. For example, poor application by spraying may occur, as a result of which the required pickup may not be obtained, and sufficient recoverability may not be attainable in the inorganic fiber mat. At below 100, unfavorable effects may arise, such as an inability to achieve sufficient recoverability in the inorganic fiber mat. The above degree of polymerization is the weight-average degree of polymerization obtained as a polystyrene-equivalent value by aqueous gel permeation chromatography (GPC). Also, the degree of saponification of the polyvinyl alcohol resin, based on the test method in JIS K 6726, is preferably at least 70 mol%, and more preferably at least 80 mol%; the upper limit value is preferably less than 99.5 mol%. When this degree of saponification is 99.5 mol% or more, the rise in viscosity at low temperatures may increase and gelation may occur.
A commercial product may be used as the polyvinyl alcohol resin of component (A). One such example is Poval (PVA) from Japan Vam & Poval Co., Ltd.
The metal salt serving as component (B), although not particularly limited, is preferably one or more selected from the group consisting of oxides, hydroxides, carbonates, sulfates, silicates, titanates, acetates and benzoates of one or more metal selected from the group consisting of sodium, potassium, magnesium, calcium, strontium, barium, titanium, zirconium, manganese, iron, cobalt, nickel, copper, zinc and aluminum. One or more metal salt selected from the group consisting of hydroxides, carbonates, sulfates, silicates and acetates of one or more metal selected from the group consisting of sodium, magnesium, calcium, and barium is more preferred. A salt of a monovalent or divalent metal is especially preferred.
Specific examples include titanium oxide, zinc oxide, magnesium oxide, calcium hydroxide, aluminum hydroxide, magnesium hydroxide, sodium carbonate, calcium carbonate, magnesium carbonate, calcium sulfate, barium sulfate, magnesium sulfate, calcium silicate, potassium titanate, calcium titanate, barium titanate, calcium acetate and sodium benzoate.
The metal salt serving as component (B) has an average particle size that is preferably 50 $\mu$m or less, and more preferably 20 $\mu$m or less but at least 10 nm. At an average particle size greater than 50 $\mu$m, settling out of the particles may occur. The average particle size is measured as the median diameter (D50) by the laser diffraction method.
The metal salt serving as component (B) is included in an amount per 100 parts by weight of the polyvinyl alcohol resin (A) that is from 1 to 50 parts by weight, and preferably from 3 to 40 parts by weight. At more than 50 parts by weight, the undesirable effect of gelation may occur. At less than 1 part by weight, the mat recoverability may decline, which is also undesirable.
The metal salt serving as component (B) is added to an aqueous solution of the polyvinyl alcohol resin (A)

dissolved in water, and is dispersed with a high-speed disperser.

The maleic anhydride-containing copolymer modified with ammonia which is included as component (C) functions as a crosslinking agent in the present invention. This ammonia-modified maleic anhydride-containing copolymer (C) is exemplified by, but not particularly limited to, copolymers of the following general formula.

[Chem. 2]

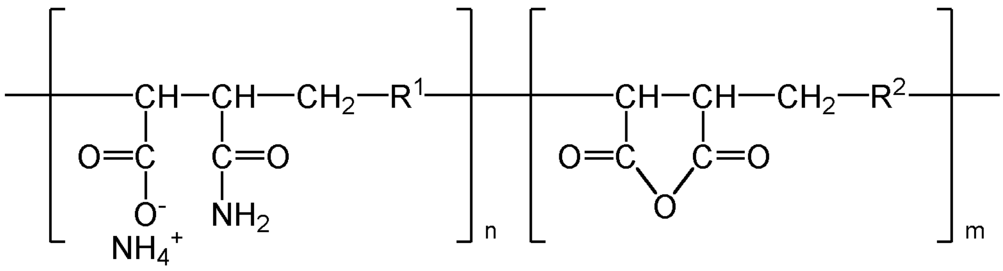

In this formula, $R^1$ and $R^2$ are each independently a linear or branched alkylene group of 2 to 5 carbon atoms and may have one or two unsaturated groups. Examples include ethylene, propylene, isopropylene, n-butylene, isobutylene, ethylene-propylene and butadiene groups. $R^1$ and $R^2$ may be the same or different.

Examples of component (C) include ammonia-modified copolymers of maleic anhydride with isobutylene, isopropylene, ethylene, ethylene-propylene or butadiene. Ammonia-modified isobutylene-maleic anhydride copolymers of the following structural formula are especially preferred.

[Chem. 3]

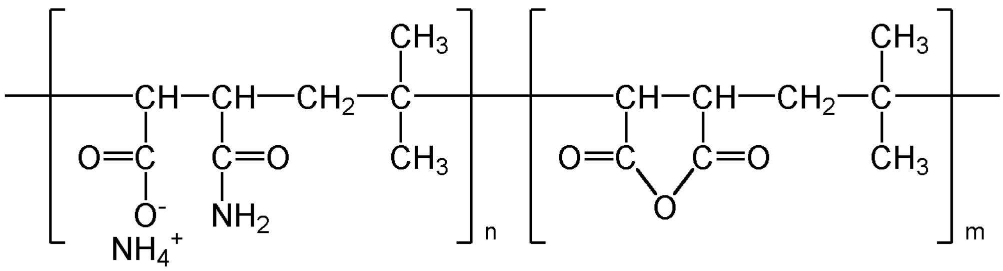

The ammonia-modified maleic anhydride-containing copolymer serving as component (C) has a weight-average molecular weight that is preferably from 50,000 to 300,000, more preferably from 50,000 to 200,000, and most preferably from 50,000 to 100,000. This weight-average molecular weight is the polystyrene-equivalent value obtained by aqueous gel permeation chromatography (GPC).

The subscripts n and m in the formula are positive numbers and represent weight ratios, with n being preferably from 50 to 90 wt%, and more preferably from 70 to 80 wt%, relative to 100 wt% for n and m combined (n+m).

The content of the ammonia-modified maleic anhydride-containing copolymer (C) per 100 parts by weight of the polyvinyl alcohol resin (A) is at least 3 parts by weight, preferably from 3 to 20 parts by weight, and more preferably from 3 to 10 parts by weight. At an ammonia-modified maleic anhydride-containing copolymer content below 3 parts by weight, unfavorable effects such as insufficient crosslinkability may arise. At a content greater than 20 parts by weight, the miscibility with the polyvinyl alcohol resin serving as component (A) poses no problems, but the aqueous treatment solution of the binder takes on a yellow coloration, which may lower the product quality. Also, such a high content may lead to higher costs.

A commercial product may be used as the maleic acid-containing copolymer of component (C). One such example is ISOBAM from Kuraray Co., Ltd.

In addition, aside from (A) a polyvinyl alcohol resin, (B) a metal salt and (C) an ammonia-modified maleic anhydride-containing copolymer, additives such as water-retaining materials (e.g., urea), silane coupling agents, water repellents, pH adjustors and colorants may be optionally added to the inorganic fiber binder of the invention. The amounts in which these additives are added may be set as desired within ranges that do not detract from the advantageous effects of the invention.

The inorganic fiber binder of the invention is preferably dissolved in water and used as an aqueous solution of the inorganic fiber binder. The aqueous solution has a viscosity at 25°C that is preferably from 1 to 100 mPa·s, and especially from 1 to 50 mPa·s. This viscosity is a measured value obtained with a rotational viscometer. At a viscosity greater than 100 mPa·s, spraying (discharge) is poor and the amount of adhering binder (binder pickup) following treatment decreases, as a result of which it may be impossible to exhibit the advantageous effects of the invention. Also, the concentration is preferably 10 wt% or less, more preferably 5 wt% or less, and most preferably 3 wt% or less.

The above aqueous solution of the inorganic fiber binder has a pH that is preferably from 4 to 10. At a pH outside of this range, the crosslinkability changes, which may have an effect on the recoverability.

The inorganic fiber binder of the invention may be used on various inorganic fibers, and exhibits advantageous effects that are particularly outstanding on glass wool and rock wool.

The inorganic fiber mat of the invention is formed by treating inorganic fibers with the above inorganic fiber binder. The inorganic fibers used in the inorganic fiber mat are not particularly limited, although glass wool or rock wool having an average particle size of from 1 to 10 μm is preferred.

The fiberization method employed to form the inorganic fibers may be a known method such as one that involves the application of centrifugal force or blowing. The inorganic fiber mat may be of a density such as that used in ordinary thermal insulating or acoustic insulation. The mat density is preferably 40 $kg/m^3$ or less, and more preferably 32 $kg/m^3$ or less.

The inorganic fiber binder is used in an amount, expressed as a solids ratio with respect to the inorganic fibers, that is preferably from 1 to 10 wt%, and more preferably from 1 to 5 wt%. At less than 1 wt%, the inorganic fiber mat formed may have a poor recoverability. At more than 10 wt%, undesirable effects such as the formation of a firmly crushed inorganic fiber mat may arise.

An example of a method for producing an inorganic fiber mat using the inorganic fiber binder of the invention is described below while referring to FIGS. 1 and 2. FIG. 1 is a schematic diagram showing a process for manufacturing an inorganic fiber mat using the inorganic fiber binder of the invention, and FIG. 2 is a perspective view showing a process for applying the inorganic fiber binder of the invention onto inorganic fibers.

First, a fiberization step that spins out inorganic fibers such as glass wool from a fiberizing device 1 is carried out. Here, the method of fiberization with the fiberizing device 1 is exemplified by, without particular limitation, known methods such as centrifugation techniques and blowing techniques. Depending on the density, the thickness and the width in the crosswise direction of the inorganic fiber mat 7 to be manufactured, it is also possible to provide a plurality of fiberizing devices 1.

Next, as shown in FIG. 2, the binder of the invention is applied by binder applicators 2 onto the inorganic fibers 3 discharged from the fiberizing devices 1. A hitherto known method may be used to apply the binder. For example, the binder may be applied by spraying on the aqueous binder solution described above. Treatment is carried out by depositing the binder primarily at points of intersection between the fibers and also at places other than such intersections, either directly from above the fibers or at an angle.

Also shown is a conveyor 41, which is an apparatus that stacks onto a perforated conveyor the inorganic fibers 3 on which uncured binder has been deposited. In order to uniformly stack the fibers, the conveyor 41 is preferably a perforated conveyor equipped with a suction unit.

As used herein, the "pickup" of binder in the invention refers to an amount measured by what is called the "loss of ignition" method and signifies the weight of the material that is lost when a dry specimen of the inorganic fiber mat following binder deposition is ignited at about 550°C.

The inorganic fibers 3 to which binder has been applied in the above step are piled onto the conveyor 41 disposed below the fiberizing devices 1 and successively move to another conveyor 42 that is arranged in the direction of the production line. The piled inorganic fibers 3, while being compressed to a predetermined thickness by the latter conveyor 42 and yet another conveyor 5 disposed above and opposite thereto across a predetermined interval, then enter a forming oven 6 situated at the positions of conveyors 42 and 5.

In the forming oven 6, the inventive binder that has been applied to the inorganic fibers 3 heat cures, forming an inorganic fiber mat 7 of a predetermined thickness. The processing conditions will vary considerably depending on the length of the production line and other parameters, and so should be set as appropriate. For example, in the examples of the invention described below, the heating temperature is preferably between 150°C and 300°C, and more preferably between 180°C and 250°C. At a heating temperature below 150°C, moisture in the inorganic fiber mat 7 may not completely evaporate; at a heating temperature above 300°C, the binder with which the inorganic fiber mat has been treated may carbonize. Also, the heating time is preferably from 120 to 360 seconds, and more preferably from 280 to 300 seconds. At a heating time shorter than 120 seconds, moisture in the inorganic fiber mat 7 may not completely evaporate; at a heating time longer than 360 seconds, the binder with which the inorganic fiber mat 7 has been treated may carbonize. The formed inorganic fiber mat 7 is subsequently cut to predetermined product dimensions with a cutter 8 stationed at another conveyor 43, following which it is carried away by yet another conveyor 44 and then wrapped and packaged.

The inventive inorganic fiber mat that has been produced in this way has an excellent recovery ratio compared with inorganic fiber mats treated with conventional binders such as phenolic resins that have hitherto been disclosed in the art, yet the amount of VOCs released from this inorganic fiber mat is extremely low.

Under the Japanese Industrial Standards, (JIS), formaldehyde emission rates are separated into several levels. For example, JIS A 9504 divides the formaldehyde emission rate into the three levels: F☆☆ to F☆☆☆☆. These represent formaldehyde emission rates of, respectively, 5 $\mu g/m^2 \cdot h$ or less (F☆☆☆☆), more than 5 $\mu g/m^2 \cdot h$ and up to 20 $\mu g/m^2 \cdot h$ (F☆☆☆), and more than 20 $\mu g/m^2 \cdot h$ and up to 120 $\mu g/m^2 \cdot h$ (F☆☆). The best level is F☆☆☆☆. Using the inorganic fiber binder of the invention, inorganic fiber mats of the F☆☆☆☆ level, as determined in tests based on the small chamber method of JIS A 1901, can be produced.

As used herein, the "recovery ratio" of the inorganic fiber mat of the invention is defined as the ratio of the thickness of the inorganic fiber mat when compressed under the application of an external force and then allowed to recover by release of the force to the thickness of the inorganic fiber mat prior to compression. To increase the efficiency of storage and transport, at least a given number of inorganic fiber mats are sometimes compressed and packaged together. For this reason, in cases where the thickness prior to compression cannot be restored in an inorganic fiber mat after being unpacked, i.e., in cases where the inorganic fiber mat has a poor recovery ratio, the intended performance, including thermal insulating properties and sound insulating properties, may not be fully achievable.

## EXAMPLES

Production Examples, Examples of the invention and Comparative Examples are given below to more concretely illustrate the invention, although the invention is not limited by these Examples. In the Examples below, "parts" and "%" are both by weight.

[Examples 1 to 7]

An aqueous solution of inorganic fiber binder having a concentration of 2 wt% was prepared by dissolving 100 parts of the polyvinyl alcohol shown in Table 1, 10 parts of calcium carbonate (D50 = 1.4 $\mu m$) and 5 parts of ammonia-modified isobutylene-maleic anhydride copolymer in deionized water. Using glass wool having length × width × thickness dimensions of 10 cm × 10 cm × 0.5 cm and a density of 0.025 $g/cm^3$ as the inorganic fibers, the glass wool was treated by the spray application of the aqueous solution of inorganic fiber binder prepared above and dried by heating under treatment conditions of 200°C and 300 seconds in the Examples, thereby fabricating 12 inorganic fiber mats. These were stacked to an inorganic fiber mat thickness of 10 cm, giving an inorganic fiber mat having density of 0.015 $g/cm^3$. The inorganic fiber mat was treated with an amount of inorganic fiber binder such that the binder pickup on the inorganic fibers, expressed as the solids ratio of the inorganic fiber binder with respect to the weight of the inorganic fiber mat following treatment, was 4%.

[Examples 8 to 13]

Aside from changing in each Example the type of metal salt shown in Table 1, aqueous solutions of inorganic fiber binder were prepared and inorganic fiber mats were fabricated by the same production method as in Example 2.

[Examples 14 to 17]

Aside from setting the amount of metal salt in Examples 2 and 11 to 3 parts and 40 parts, respectively, aqueous solutions of inorganic fiber binder were prepared and inorganic fiber mats were fabricated by the same production method as in Example 2.

[Examples 18 and 19]

Aside from setting the amount of crosslinking agent in these Examples to 3 parts and 10 parts, respectively, aqueous solutions of inorganic fiber binder were prepared and inorganic fiber mats were fabricated by the same production method as in Example 2.

[Comparative Examples 1 and 2]

Aside from using the phenolic resin "Shonol BRL-1015" (a water-soluble phenol from Showa Highpolymer Co., Ltd.) or the phenolic resin "FG-1032" (a water-soluble phenol from DIC Corporation) instead of polyvinyl alcohol, aqueous solutions of inorganic fiber binder were prepared and inorganic fiber mats were fabricated in the same way as in Example 1.

[Comparative Example 3]

Aside from not using a metal salt, an aqueous solution of inorganic fiber binder was prepared and an inorganic fiber mat was fabricated in the same way as in Example 2.

[Comparative Example 4]

Aside from setting the amount of crosslinking agent to 1 part, an aqueous solution of inorganic fiber binder was prepared and an inorganic fiber mat was fabricated in the same way as in Example 2.

[Comparative Examples 5 and 6]

Aside from setting the amount of metal salt to 0.5 part, aqueous solutions of inorganic fiber binder were prepared and inorganic fiber mats were fabricated in the same way as in Example 2.

[Evaluation Methods]

The recovery rate, formaldehyde emission rate, formaldehyde concentration and storage stability of the inorganic fiber mats in Examples 1 to 19 and Comparative Examples 1 to 6 were measured. The formaldehyde emission rate was measured based on JIS A 1901.

<Recovery Ratio of Inorganic Fiber Mat>

During inorganic fiber mat package production, 10 cm × 10 cm × 10 cm samples were removed, a 20 kg load was applied to the samples for one hour, the thickness (dx) of the inorganic fiber mat after loading was measured, and the recovery ratio was determined from formula (1) below for five samples (n = 5). The results are presented in Tables 1 and 2.

The recovery ratio is preferably 65% or more, and more preferably 70% or more.

$$R = (dx/d) \times 100 \qquad (1)$$

where R: recovery ratio (%)

dx: thickness of inorganic fiber mat following recovery (mm)
d: nominal thickness of inorganic fiber mat prior to test (mm)

<Formaldehyde Emission Rate>

A section of the inorganic fiber mat package obtained by suitably cutting the package and adjusting the surface area to 440 $cm^2$ was used as the test specimen for measuring the formaldehyde emission rate. The formaldehyde emission rate was measured under the following conditions: measurement period, 7 days; temperature and relative humidity within test chamber, 28°C and 50%; chamber volume, 20 L; number of air changes per hour, 0.5. Sampling was carried out by collecting air within the chamber using a DNPH (2,4-dinitrophenylhydrazine)-silica short body cartridge (Waters Corporation). The carbonyl compound concentration was measured using acetonitrile as the solvent, the sample volume was set to 10 L and the sampling flow rate was set to 167 mL/min. The formaldehyde emission rate was determined from this result in accordance with JIS A 1901 and JIS A 1902. The formaldehyde emission rates thus obtained are shown in Tables 1 and 2.

<Formaldehyde Concentration>

Using a method based on the MBTH colorimetric method, the "PACKTEST Formaldehyde" (model WAK-FOR) K-1 reagent (one small pack) from Kyoritsu Chemical-Check Lab., Corp. is added to 1.5 mL of the 2 wt% aqueous binder solution obtained in the above Examples, following which the solution is shaken 5 or 6 times at room temperature to effect a reaction and is then left at rest for 3 minutes. The entire volume is then drawn up into a polyethylene tube, shaken 5 or 6 times to bring about coloration and then left at rest for one minute. After being left at rest, the color of the sample is compared with standard colors and the concentration (color) close to a reference color is measured.

The results are presented in Tables 1 and 2.

<Storage Stability of Treatment Solution>

The condition of the above aqueous binder solution (concentration, 2 wt%) after being left at rest for one month at normal temperature was visually examined.

○: Separation was not observed in the aqueous binder solution
×: The aqueous binder solution separated or gelled.

When the aqueous binder solution separates or gels, nozzle clogging may occur, making spray application impossible.

[Table 1]

| | Formulation (pbw) | Example 1 | 2 | 3 | 4 | 5 | 6 | 7 | 8 | 9 | 10 | 11 | 12 | 13 |
|---|---|---|---|---|---|---|---|---|---|---|---|---|---|---|
| Polyvinyl alcohols | JF-05 | 100 | | | | | | | | | | | | |
| | JP-05 | | 100 | 100 | | | | | 100 | 100 | 100 | 100 | 100 | 100 |
| | JL-05 E | | | | 100 | | | | | | | | | |
| | JM-17 | | | | | 100 | | | | | | | | |
| | JC-25 | | | | | | 100 | | | | | | | |
| | JP-33 | | | | | | | 100 | | | | | | |
| Metal salts | Magnesium hydroxide | | | | | | | | 10 | | | | | |
| | Calcium hydroxide | | | | | | | | | 10 | | | | |
| | Aluminum hydroxide | | | | | | | | | | 10 | | | |
| | Sodium carbonate | | | | | | | | | | | 10 | | |
| | Calcium carbonate | 10 | 10 | 10 | 10 | 10 | 10 | 10 | | | | | | |
| | Magnesium sulfate | | | | | | | | | | | | 10 | |
| | Barium sulfate | | | | | | | | | | | | | 10 |
| Phenolic resins | Shonol BRL-1015 | | | | | | | | | | | | | |
| | FG-1032 | | | | | | | | | | | | | |
| Crosslinking agents | ISOBAM-104 | 5 | 5 | | 5 | 5 | 5 | 5 | 5 | 5 | 5 | 5 | 5 | 5 |
| | ISOBAM-110 | | | 5 | | | | | | | | | | |
| Evaluations | Recovery ratio (%) | 72 | 71 | 71 | 70 | 74 | 74 | 72 | 73 | 73 | 65 | 72 | 72 | 66 |
| | Formaldehyde emission rate (μg/m²·h) | <5 | <5 | <5 | <5 | <5 | <5 | <5 | <5 | <5 | <5 | <5 | <5 | <5 |
| | Formaldehyde concentration (mg/L) | <0.2 | <0.2 | <0.2 | <0.2 | <0.2 | <0.2 | <0.2 | <0.2 | <0.2 | <0.2 | <0.2 | <0.2 | <0.2 |
| | Storage stability | ○ | ○ | ○ | ○ | ○ | ○ | ○ | ○ | ○ | ○ | ○ | ○ | ○ |

[Table 2]

| Formulation (pbw) | | Example | | | | | | Comparative Example | | | | | |
|---|---|---|---|---|---|---|---|---|---|---|---|---|---|
| | | 14 | 15 | 16 | 17 | 18 | 19 | 1 | 2 | 3 | 4 | 5 | 6 |
| Polyvinyl alcohols | JF-05 | | | | | | | | | | | | |
| | JP-05 | 100 | 100 | 100 | 100 | 100 | 100 | | | 100 | 100 | 100 | 100 |
| | JL-05 E | | | | | | | | | | | | |
| | JM-17 | | | | | | | | | | | | |
| | JC-25 | | | | | | | | | | | | |
| | JP-33 | | | | | | | | | | | | |
| Metal salts | Magnesium hydroxide | | | | | | | | | | | | |
| | Calcium hydroxide | | | | | | | | | | | | |
| | Aluminum hydroxide | | | | | | | | | | | | |
| | Sodium carbonate | | | 3 | 40 | | | | | | | | 0.5 |
| | Calcium carbonate | 3 | 40 | | | 10 | 10 | | | | 10 | 0.5 | |
| | Magnesium sulfate | | | | | | | | | | | | |
| | Barium sulfate | | | | | | | | | | | | |
| Phenolic resins | Shonol BRL-1015 | | | | | | | 100 | | | | | |
| | FG-1032 | | | | | | | | 100 | | | | |
| Crosslinking agents | ISOBAM-104 | 5 | 5 | 5 | 5 | 3 | 10 | | | 5 | 1 | 5 | 5 |
| | ISOBAM-110 | | | | | | | | | | | | |
| Evaluations | Recovery ratio (%) | 68 | 73 | 69 | 74 | 70 | 72 | 71 | 71 | 60 | 41 | 61 | 61 |
| | Formaldehyde emission rate ($\mu g/m^2 \cdot h$) | <5 | <5 | <5 | <5 | <5 | <5 | 30 | 30 | <5 | <5 | <5 | <5 |
| | Formaldehyde concentration (mg/L) | <0.2 | <0.2 | <0.2 | <0.2 | <0.2 | <0.2 | 2< | 2< | <0.2 | <0.2 | <0.2 | <0.2 |
| | Storage stability | ○ | ○ | ○ | ○ | ○ | ○ | x | x | ○ | ○ | ○ | ○ |

The compounding ratios in above Tables 1 and 2 are numerical values based on the solids.

Details on the polyvinyl alcohols in the tables are as follows.

- JF-05 (completely saponified Poval: degree of saponification, 98 to 99%; degree of polymerization, 500)
- JP-05 (partially saponified Poval: degree of saponification, 87 to 89%; degree of polymerization, 500)
- JL-05E (partially saponified Poval: degree of saponification, 80 to 84%; degree of polymerization, 500)
- JM-17 (intermediately saponified Poval: degree of saponification, 95 to 97%; degree of polymerization, 1700)
- JC-25 (completely saponified Poval: degree of saponification, 99 to 99.4%; degree of polymerization, 250)
- JP-33 (partially saponified Poval: degree of saponification, 87 to 89%; degree of polymerization, 3300)

All of the above are from Japan Vam & Poval Co., Ltd.

Details on the metal salts in the tables are as follows.

| | |
|---|---|
| • Magnesium hydroxide | (Kyowasuimag, from Kyowa Chemical Industry Co., Ltd.; D50 = 11.1 μm) |
| • Calcium hydroxide | (Slaked Lime No. 1, from OMI Mining Co., Ltd.) |
| • Aluminum hydroxide | (Higilite H-42, from Showa Denko K.K.; D50 = 1.0 μm) |
| • Sodium carbonate | (Soda ash (light), from Tokuyama Corporation) |
| • Calcium carbonate | (Escalon #2300, from Sankyo Seifun K.K.; D50 = 1.4 μm) |
| • Magnesium sulfate | (Magnesium Sulfate, from Torii Kasei Kogyo K.K.) |
| • Barium sulfate | (BF-10, from Sakai Chemical Industry Co., Ltd.; D50 = 0.06 μm) |

ISOBAM-104 in the tables is an ammonia-modified isobutylene-maleic anhydride copolymer from Kuraray Co., Ltd. which has the chemical structural formula shown below and a weight-average molecular weight of from 55,000 to 65,000. Here, n = 70 to 80 wt% and m = 20 to 30 wt%.

[Chem. 4]

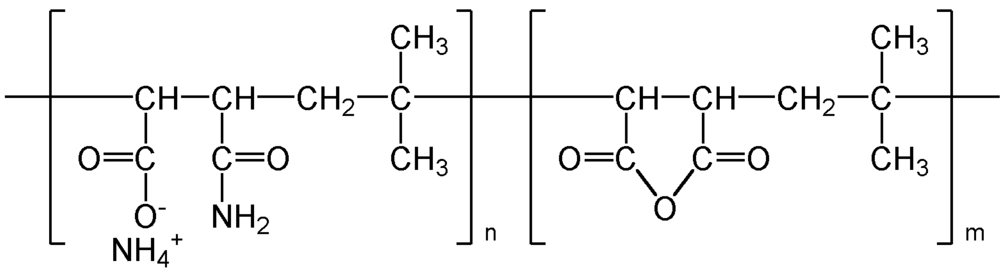

ISOBAM-110 in the tables is an ammonia-modified isobutylene-maleic anhydride copolymer from Kuraray Co., Ltd. which has the chemical structural formula shown below and a weight-average molecular weight of from 160,000 to 170,000. Here, n = 70 to 80 wt% and m = 20 to 30 wt%.

[Chem. 5]

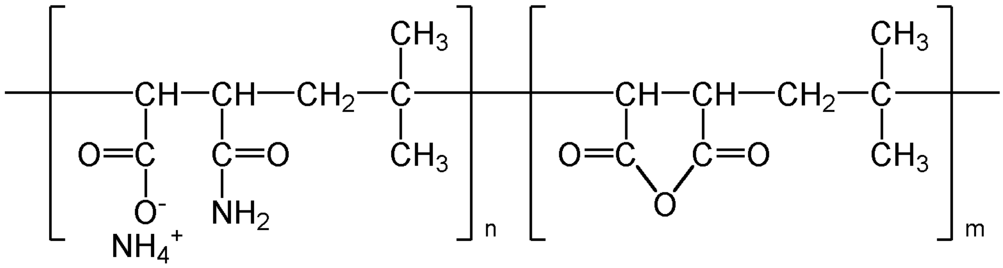

REFERENCE SIGNS LIST

| | |
|---|---|
| 1 | Fiberizing devices |
| 2 | Binder applicators |
| 3 | Inorganic fibers |
| 41, 42, 43, 44, 5 | Conveyors |
| 6 | Forming oven |
| 7 | Inorganic fiber mat |
| 8 | Cutter |

## Claims

1. A binder for inorganic fibers, comprising:

   (A) 100 parts by weight of a polyvinyl alcohol resin having a degree of polymerization of from 100 to 3,500,
   (B) from 1 to 50 parts by weight of a metal salt, and
   (C) at least 3 parts by weight of a maleic anhydride-containing copolymer modified with ammonia.

2. The inorganic fiber binder of claim 1, wherein the polyvinyl alcohol resin (A) has a degree of saponification of at least 70 mol%.

3. The inorganic fiber binder of claim 1 or 2, wherein the metal salt (B) includes at least one selected from the group consisting of oxides, hydroxides, carbonates, sulfates, silicates, titanates, acetates and benzoates.

4. The inorganic fiber binder of any one of claims 1 to 3, wherein the ammonia-modified maleic anhydride-containing copolymer (C) has a weight-average molecular weight of from 50,000 to 300,000 and has the following structural formula

[Chem. 1]

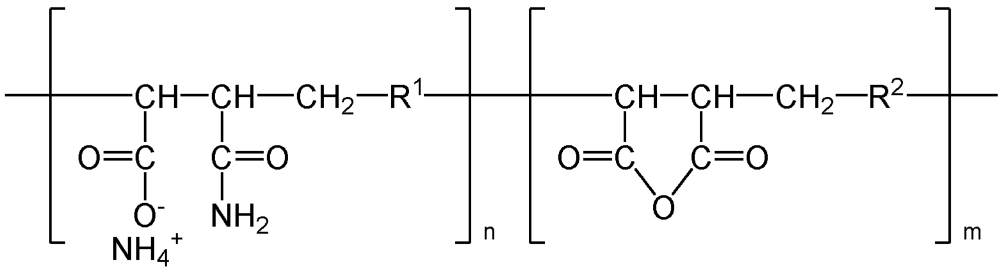

(wherein $R^1$ and $R^2$ are each independently a linear or branched alkylene group of 2 to 5 carbon atoms and n and m are positive numbers, the content of n per 100 wt% of n and m combined (n+m) being from 50 to 90 wt%).

**5.** The inorganic fiber binder of any one of claims 1 to 4, wherein the metal salt (B) is a metal salt having a monovalent or divalent metal.

**6.** The inorganic fiber binder of any one of claims 1 to 5, wherein the ammonia-modified maleic anhydride-containing copolymer is an ammonia-modified isobutylene-maleic anhydride copolymer.

**7.** The inorganic fiber binder of any one of claims 1 to 6, wherein the inorganic fibers are glass wool or rock wool.

**8.** An inorganic fiber mat comprising inorganic fibers treated with the inorganic fiber binder of any one of claims 1 to 7.

FIG.1

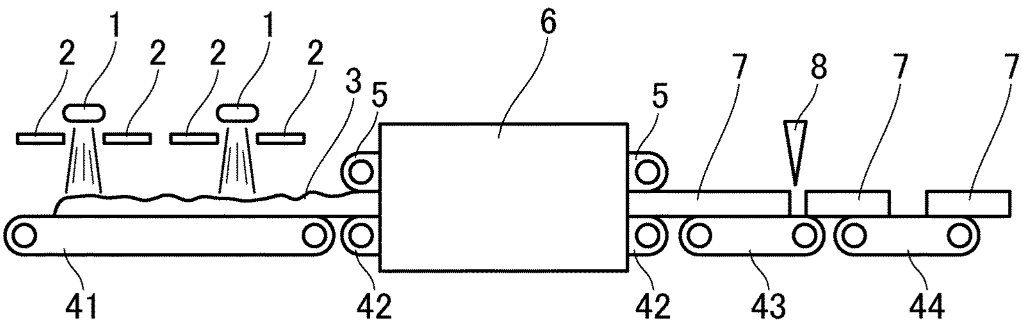
1
1
2
2
2
2
3
5
6
5
7
8
7
7
41
42
42
43
44

FIG.2

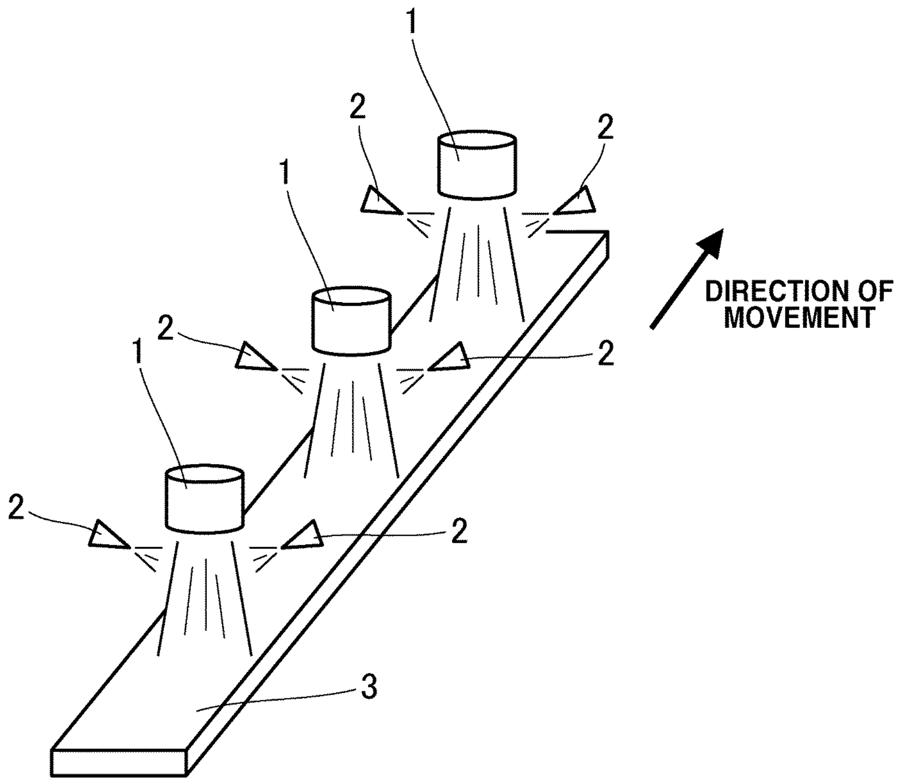
1
1
1
2
2
2
2
2
2
3
DIRECTION OF
MOVEMENT

## INTERNATIONAL SEARCH REPORT

International application No. PCT/JP2020/031368

A. CLASSIFICATION OF SUBJECT MATTER

D04H 1/587(2012.01)i; C03C 25/1095(2018.01)i; C03C 25/32(2018.01)i; C03C 25/42(2006.01)i; C04B 38/00(2006.01)i; C08K 3/18(2006.01)i; C08K 3/22(2006.01)i; C08K 5/098(2006.01)i; C08K 7/04(2006.01)i; C08L 23/22(2006.01)i; C08L 29/02(2006.01)i; C08L 29/04(2006.01)i; C08L 35/02(2006.01)i; D04H 1/4209(2012.01)i; D04H 1/4218(2012.01)i; D06M 11/00(2006.01)i; D06M 15/263(2006.01)i; D06M 15/333(2006.01)i

FI: D04H1/587; C03C25/1095; C03C25/32; C03C25/42; C04B38/00 303A; C08K3/18; C08K3/22; C08K5/098; C08K7/04; C08L23/22; C08L29/02; C08L29/04 C; C08L35/02; D04H1/4209; D04H1/4218; D06M11/00; D06M15/263; D06M15/333

According to International Patent Classification (IPC) or to both national classification and IPC

B. FIELDS SEARCHED

Minimum documentation searched (classification system followed by classification symbols)

D04H1/587; C03C25/1095; C03C25/32; C03C25/42; C04B38/00; C08K3/18; C08K3/22; C08K5/098; C08K7/04; C08L23/22; C08L29/02; C08L29/04; C08L35/02; D04H1/4209; D04H1/4218; D06M11/00; D06M15/263; D06M15/333

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2018-199881 A (NISSIN CHEMICAL CO., LTD.) 20.12.2018 (2018-12-20) claims 1-4, 6-7, paragraphs [0001], [0010]-[0038] | 1-3, 5-8<br>4 |
| Y<br>A | JP 2006-89906 A (SANYO CHEMICAL INDUSTRIES, LTD.) 06.04.2006 (2006-04-06) claims 1-5, paragraphs [0001], [0005]-[0049] | 1-3, 5-8<br>4 |
| Y<br>A | JP 2008-515761 A (JOHNS MANVILLE) 15.05.2008 (2008-05-15) claims 1, 4, 13-15, paragraphs [0001], [0018]-[0036] | 1-3, 5-8<br>4 |

☒ Further documents are listed in the continuation of Box C.   ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 30 September 2020 (30.09.2020) | 13 October 2020 (13.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/031368

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2016-108707 A (PARAMOUNT GLASS MFG. CO., LTD.) 20.06.2016 (2016-06-20) claims 1-3, paragraphs [0001], [0012]-[0050] | 1-3, 5-8<br>4 |
| A | US 2010/0029160 A1 (GEORGIA-PACIFIC CHEMICALS LLC) 04.02.2010 (2010-02-04) whole document | 1-8 |
| A | US 2002/0130439 A1 (BASF AKTIENGESELLSCHAFT) 19.09.2002 (2002-09-19) whole document | 1-8 |

Form PCT/ISA/210 (continuation of second sheet) (January 2015)

**INTERNATIONAL SEARCH REPORT**
Information on patent family members

International application No.
PCT/JP2020/031368

| Patent Documents referred in the Report | Publication Date | Patent Family | Publication Date |
|---|---|---|---|
| JP 2018-199881 A | 20 Dec. 2018 | CN 108930094 A<br>KR 10-2018-0130449 A | |
| JP 2006-89906 A | 06 Apr. 2006 | (Family: none) | |
| JP 2008-515761 A | 15 May 2008 | US 2006/0078719 A1<br>claims 1, 4, 13-15, paragraphs [0002], [0022]-[0041]<br>WO 2006/041848 A2<br>KR 10-2007-0088596 A<br>CN 101039968 A | |
| JP 2016-108707 A | 20 Jun. 2016 | (Family: none) | |
| US 2010/0029160 A1 | 04 Feb. 2010 | WO 2007/149643 A1<br>CN 104136540 A | |
| US 2002/0130439 A1 | 19 Sep. 2002 | EP 1225193 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S58070760 A
- JP 2005299013 A
- JP 2006089906 A
- JP 2011153395 A
- WO 2005092814 A
- JP 2012136385 A
- JP 2016108707 A
- JP 2016108708 A
- JP S60046951 A